# EUROPÄISCHE PATENTANMELDUNG

(11) **EP 1 029 486 A1**
(43) Veröffentlichungstag der Anmeldung: **23.08.2000**
(21) Anmeldenummer: 00100549.5
(22) Anmeldetag: 12.01.2000
(51) Int. Cl.: A47J 36/04, C03B 32/02, C03B 19/04

(54) **Kochgeschirr, ausgebildet als Wok-Kochgefäss und Verfahren zu dessen Herstellung**

(30) Priorität: 17.02.1999 DE 19906520
(71) Anmelder: Schott Glas, 55122 Mainz (DE); CARL-ZEISS-STIFTUNG trading as Schott Glas, 55122 Mainz (DE)
(72) Erfinder: Rode, Erich, Dr., 55126 Mainz (DE); Götz, Helga, 55118 Mainz (DE); Hubert, Stefan, 55270 Bubenheim (DE); Weiss, Evelin, 55131 Mainz (DE); Schober, Patrik, 55129 Mainz-Ebersheim (DE); Schillert, Horst, 31073 Grünenplan (DE)
(74) Vertreter: Fuchs Mehler Weiss & Fritzsche

(57) **Zusammenfassung**

Ein derartiges Kochgeschirr ist in Form von metallischen Woks auf dem Markt, die eine Reihe von Nachteilen haben, insbesondere sind sie wegen der Porösität der Innenoberfläche reinigungsunfreundlich..

Die Erfindung sieht eine gekrümmt, vorzugsweise sphärisch geförmte Hartglas- oder Glaskeramik-Schale (1) als Wok-Kochgefäß vor, in dem man Speisen direkt zubereiten kann. Der erfindungsgemäße, aus der gekrümmten Hartglas- bzw. Glaskeramik-Schale (1) bestehende Wok ist durch seine porenfreie Oberfläche leicht zu reinigen, weil keine Speisereste anhaften. Er hat ferner eine im Sinne des Wok-Kochens günstige Temperaturverteilung und kann universell beheizt werden, sei es durch einen Strahlungsheizkörper oder einen atmosphärischen Gas-Brenner.

## Beschreibung

Die Erfindung bezieht sich auf ein Kochgeschirr, ausgebildet als Wok-Kochgefäß zum direkten Heißzubereiten von Speisen. Ein derartiges Kochgeschirr mit sphärisch bzw. asphärisch gekrümmten Flächen wird auch entsprechend seinem fernöstlichen Ursprung kurz als Wok bezeichnet.

Die Erfindung betrifft ferner ein Verfahren zu dessen Herstellung.

Speziell im asiatischen Raum werden Speisen bevorzugt in metallischen bzw. gußeisernen Woks zubereitet, die mittels einer Gasflamme oder mittels eines Holzfeuers von unten beheizt werden. Dabei werden Fleisch, Gemüse, Reis usw. separat zunächst in der Mitte des Woks, wo dieser am heißesten ist, angebraten und dann zum kühleren Rand hin geschoben. Vor dem Servieren wird dann alles vermischt.

Diese typischen Woks können wegen ihres sphärischen Bodens nicht auf ebenen, insbesondere elektrisch beheizten Kochflächen, benutzt werden. Es gibt daher "abgewandelte" Woks aus Gußeisen, Edelstahl oder Aluminium, die einen abgeflachten Boden haben, so daß diese auch bei ebenen Kochflächen benutzt werden können. Da diese abgewandelten Woks auch im Inneren eine ebene Fläche haben, ergeben sich nicht die gleichen Kocheigenschaften wie beim typischen sphärischen Wok.

Es sind auch elektrisch beheizte Auftisch-Woks bekannt, bei welchen eine Metallschale von unten mit einer Glühwendel beheizt wird und in einem Gehäuse fest eingebaut ist.

Es sind ferner durch die EP 0 629 820 A 2 Woks bekannt, die induktiv beheizt werden. Dabei sitzt ein gußeiserner, typischerweise sphärisch geformter Wok, in einer entsprechend geformten Porzellan-Schale bzw. einer Schale aus Glaskeramik, auch Küvette genannt, die ihrerseits beispielsweise in die Arbeitsplatte eines Kochfeldes eingelassen ist. Durch die Rückerwärmung des aufsitzenden Metall-Woks kann diese Porzellan-Schale allerdings thermisch so stark belastet werden, daß es zum Bruch kommt.

Ferner haben alle diese auf dem Markt befindlichen Woks mit gegossenen sphärisch bzw. asphärisch geformten metallischen Halbschalen grundsätzlich den Nachteil, daß das zu garende Gut wegen der Großporigkeit der Innenfläche der Woks häufig daran anhängt, was auch die Reinigung erschwert. Die DE 298 20 731 U 1 schlägt daher vor, die Innenfläche des Woks mit einer korrosionsbeständigen Beschichtung zu versehen, die aus Hartchrom mit einer PTFE-Einbettung besteht. Das Aufbringen dieser Beschichtung ist sehr aufwendig.

Der Erfindung liegt die Aufgabe zugrunde, das eingangs bezeichnete Kochgeschirr, ausgebildet als Wok-Kochgefäß zum direkten Heifizubereiten von Speisen, so auszubilden, daß es universell beheizbar ist und keine aufwendige Innenbeschichtung benötigt.

Die Lösung dieser Aufgabe gelingt gemäß der Erfindung dadurch, daß das Wok-Kochgefäß aus Hartglas oder Glaskeramik mit einem entsprechenden geringen thermischen Längenausdehnungskoeffizienten besteht.

Hinsichtlich des Verfährens zum Herstellen eines derartigen Woks aus Hartglas gelingt die Lösung mit den Schritten:
- Bereitstellen eines vorbereiteten Hartglasrohlings
- Erhitzen des Hartglasrohlings bis auf die Erweichungstemperatur unmittelbar vor dem Verformungsprozeß
- Verformen des plastifizierten Hartglasrohlings zu dem Wok-Kochgefäß, vorzugsweise durch Tiefziehen, Vakuumsaugen oder Schwerkraftsenken, und
- Abkühlen und Austempern des ausgeformten Wok-Kochgefäßes
   **oder**
- Bereitstellen eines Glaspostens aus Hartglas
- Formen des Glaspostens durch Pressen, Blasen oder Gießen zu dem Wok-Kochgefäß, und
- Abkühlen und Austempern des ausgeformten Wok-Kochgefäßes.

Hinsichtlich des Verfahrens zum Herstellen eines derartigen Woks aus Glaskeramik gelingt die Lösung mit den Schritten:
- Bereitstellen eines verformbaren, nicht keramisierten Glasrohlings,
- Erhitzen des Glasrohlings bis auf die Erweichungstemperatur,
- Verformen des Glasrohings zu dem Wok-Kochgefäß, vorzugsweise durch Tiefziehen, Vakuumsaugen oder Schwerkraftsenken,
- Keramisieren des geformten Wok-Kochgefäßes, und
- Abkühlen des ausgeformten Wok-Kochgefäßes.

Der Deckel für das vorgenannte Kochgeschirr, hergestellt entsprechend den vorbeschriebenen Verfahren, ist vorzugsweise so ausgebildet, daß er ein gekrümmter oder ein im wesentlichen flacher Formkörper aus Hartglas oder Glaskeramik mit einem entsprechend geringen Längenausdehnungskoeffizienten ist.

Die Erfindung sowie ausgestaltende bzw. weiterbildende Merkmale von ihr sowie die erzielbaren Vorteile werden nunmehr anhand der Patentzeichnung näher beschrieben.

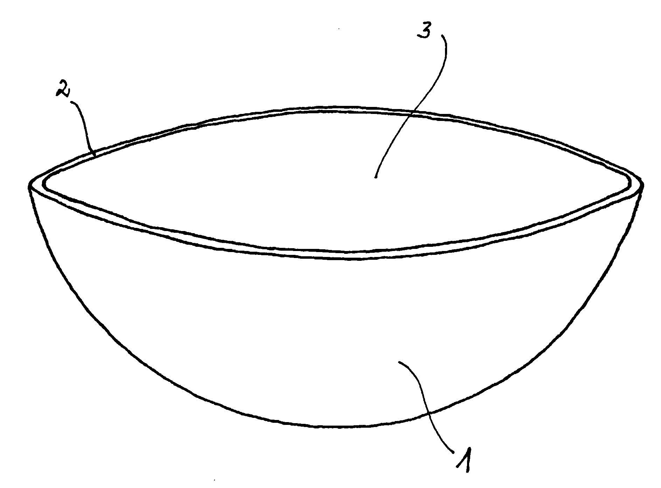

Die einzige Figur der Patentzeichnung zeigt als Beispiel einen Wok, ausgebildet als eine sphärisch geformte Halbschale 1 mit der Wandstärke 2 aus Hartglas oder Glaskeramik mit einem entsprechenden geringen thermischen Ausdehnungskoeffizienten. Gemäß der Norm DIN 1259, Teil 1, ist unter Hartglas ein chemisch resistentes und thermisch beständiges Geräteglas mit hohen Erweichungstemperaturen und einem thermischen Längenausdehnungskoeffizienten α < 6.10⁻⁶K⁻¹ zu verstehen. Ein solches Hartglas ist typischerweise Borosilikatglas.

Unter Glaskeramik ist gemäß dieser Norm ein anorganisches Schmelzprodukt mit Zusätzen von Keimbildnern zu verstehen, das beim Abkühlen zunächst zu Glas erstarrt, jedoch durch eine anschließende gesteuerte thermische Behandlung in verschiedenen Phasen auskristallisiert. Für dieses Glaskeramik-Produkt ist fast ausnahmslos ein minimaler thermischer Längenausdehnungskoeffizient charakteristisch.

Die Wandstärke 2 der den Wok bildenden Halbschale 1 liegt typischerweise im Bereich von 4 bis 6 mm.

Die den Wok bildende Glas-/Glaskeramikschale 1 kann auf konventionale Weise in einem Kochfeld eingebaut, vorzugsweise in entsprechenden Öffnungen einer ebenen Glas-/Glaskeramik-Kochfläche aufgenommen sein, die typischerweise weitere Kochstellen aufweist, seien es strahlungsbeheizte ebene Kochzonen in der Kochfläche oder Gasbrenner-Kochstellen mit atmosphärischen Brennern. Sie kann aber auch beispielsweise in einem Auftisch-Halter aufgenommen sein.

Der erfindungsgemäße Wok aus Hartglas- bzw. Glaskeramik kann sowohl mit einer offenen Gasflamme, vorzugsweise jedoch mittels eines Strahlungsheizkörpers beheizt werden. Bei einer derartigen Beheizung werden typischerweise die Speisen direkt in dem Inneren 3 des Woks zubereitet.

Wegen der geringen Wärmequerleitung von Glas und Glaskeramik gegenüber Metall entsteht dabei eine größere Temperaturdifferenz zwischen dem beheizten und nichtbeheizten Bereich. Dieser Effekt kann für die typischen Kochgewohnheiten im Wok als Vorteil gegenüber herkömmlicher Metall-Woks genutzt werden. Die kühleren Zonen, in die zuerst gegarte Speisen geschoben werden, sind tatsächlich auch deutlich kühler. Außerdem klebt durch die glatte porenfreie Oberfläche das Gargut nicht am Wok fest, wie das bei allen auf dem Markt bekannten Woks der Fall ist, wodurch die Garfläche im Innern 3 der den Wok bildenden sphärisch geformten Halbschale 1 sehr reinigungsfreundlich ist.

Die verwendeten Hartglas- bzw. Keramikwerstoffe sind für den bestimmungsgemäßen Gebrauch des Woks thermisch ausreichend belastbar.

Die Herstellung des erfindungsgemäßen Woks erfolgt, wie bereits erwähnt, indem Glas-/Glaskeramik, das/die einen ausreichend geringen Wärmeausdehnungskoeffizient besitzt, durch beispielsweise Tiefziehen, Vakuumsaugen, Schwerkraftsenken, Pressen oder Gießen zu einer woktypischen Schale verformt wird.

Unmittelbar vor dem Verformungsprozeß wird das Glas bis auf die Glaserweichungstemperatur erhitzt. Bei Glaskeramik als Ausgangsprodukt erfolgt erst nach der Verformung der Keramisierungsprozeß.

Auf diese Art können auch passende Deckel für solche Woks gefertigt werden.

Die sphärische Ausformung des Woks ist nur als Ausführungsbeispiel zu sehen. Es können auch asphärisch gekrümmte Flächenabschnitte ausgeformt sein. So kann beispielsweise der Wok in der Mitte etwas spitzer als bei einer Kugelfläche zulaufen.

## Patentansprüche

1. Kochgeschirr, ausgebildet als Wok-Kochgefäß zum direkten Heißzubereiten von Speisen, **dadurch gekennzeichnet,** daß das Wok-Kochgefäß (1) aus Hartglas oder Glaskeramik mit einem entsprechenden geringen thermischen Längenausdehnungskoeffizienten besteht.

2. Kochgeschirr nach Anspruch 1, **dadurch gekennzeichnet,** daß die Wandstärke (2) des Wok-Kochgefäßes (1) im Bereich von 3-7 mm liegt.

3. Kochgeschirr nach Anspruch 1 oder 2, **dadurch gekennzeichnet,** daß das Hartglas ein Borosilikatglas ist.

4. Verfahren zum Herstellen des Wok-Kochgefäßes aus Hartglas nach einem der Ansprüche 1 bis 3, mit den Schritten:
- Bereitstellen eines vorbereiteten Hartglasrohlings
- Erhitzen des Hartglasrohlings bis auf die Erweichungstemperatur unmittelbar vor dem Verformungsprozeß
- Verformen des plastifizierten Hartglasrohlings zu dem Wok-Kochgefäß, vorzugsweise durch Tiefziehen, Vakuumsaugen oder Schwerkraftsenken, und
- Abkühlen und Austempern des ausgeformten Wok-Kochgefäßes,
**oder**
- Bereitstellen eines Glaspostens aus Hartglas
- Formen des Glaspostens durch Pressen, Blasen oder Gießen zu dem Wok-Kochgefäß, und
- Abkühlen und Austempern des ausgeformten Wok-Kochgefäßes.

5. Verfahren zum Herstellen des Wok-Kochgefäßes aus Glaskeramik nach einem der Ansprüche 1 bis 3, mit den Schritten:
- Bereitstellen eines verformbaren, nicht keramisierten Glasrohlings,
- Erhitzen des Glasrohlings bis auf die Erweichungstemperatur,
- Verformen des Glasrohlings zu dem Wok-Kochgefäß, vorzugsweise durch Tiefziehen, Vakuumsaugen oder Schwerkraftsenken,
- Keramisieren des geformten Wok-Kochgefäßes, und
- Abkühlen des ausgeformten Wok-Kochgefäßes.
